# EUROPÄISCHE PATENTSCHRIFT

(11) **EP 3 741 274 B1**
(45) Veröffentlichungstag und Bekanntmachung des Hinweises auf die Patenterteilung: **19.07.2023**
(21) Anmeldenummer: 19176402.6
(22) Anmeldetag: 24.05.2019
(51) Int. Cl.: A47K 13/26, F16B 13/08

(54) **BEFESTIGUNGSVORRICHTUNG FÜR TOILETTENABDECKUNGEN**
FASTENING DEVICE FOR TOILET COVERS
DISPOSITIF DE FIXATION POUR COUVERCLES DE TOILETTES

(43) Veröffentlichungstag der Anmeldung: 25.11.2020
(73) Patentinhaber: Geberit International AG, 8645 Jona (CH)
(72) Erfinder: BILLINGE, Simon, Stoke On Trent, Staffordshire ST 7 1QP (GB)
(74) Vertreter: Frischknecht, Harry Ralph

(56) Entgegenhaltungen:
- WO-A1-2014/109721
- GB-A- 2 475 070
- GB-A- 2 566 357
- US-A1- 2007 017 013

## Beschreibung

### TECHNISCHES GEBIET

Die vorliegende Erfindung betrifft Befestigungsvorrichten für Toilettenabdeckungen, wie beispielsweise Toilettendeckel oder Toilettenbrillen, an Toilettenkörpern nach dem Oberbegriff von Anspruch 1.

### STAND DER TECHNIK

Eine Toilettenabdeckung ist typischerweise schwenkbar an zwei Befestigungsvorrichtungen gelagert, welche wiederum an einen Toilettenkörper angeschraubt sind. Zur Montage oder Demontage einer Befestigungsvorrichtung ist zumeist Zugriff auf den Toilettenkörper von mehreren Seiten nötig, was oft umständlich und in manchen Konfigurationen gar nicht möglich ist. Die GB 2566357 A offenbart eine Befestigungsvorrichtung nach dem Obergriff des Anspruchs 1. Die WO 2014/109721 A1 offenbart eine andere Befestigungsvorrichtung.

Aus ES 1 136 030 U ist eine Befestigungsvorrichtung bestehend aus einer Schraube, einer Unterlegscheibe und einer Mutter mit radialen Spreizelementen bekannt. Diese Befestigungsvorrichtung wird mit der Mutter voran von oben in die Montageaussparung des Toilettenkörpers geschoben, bis die Mutter auf der anderen Seite des Toilettenkörpers heraustritt. Die Schraube wird anschliessend von oben angezogen, wodurch die Befestigungsvorrichtung durch die Unterlegscheibe von oben und durch die sich abspreizenden Spreizelemente von unten an den Toilettenkörper geklemmt wird. Dadurch ist eine Montage möglich, für welche nur Zugriff von oben nötig ist. Jedoch ist die vollständige Demontage ohne Zugriff von unten im Wesentlich nicht möglich. Zwar könnte die Schraube allenfalls so gedreht werden, dass sich die Mutter löst; diese würde jedoch herunterfallen und - je nach Einbausituation - in der Anlage verweilen müssen. Insbesondere ist eine einfache Demontage und anschliessende Remontage der Befestigungsvorrichtung oft nicht möglich. Dieser Prozess ist zudem irreversibel in dem Sinne, dass durch die Art der Klemmung die Spreizelemente der Mutter verformt werden: die Mutter hat nach einer Montage und Demontage eine andere Form als vor der Montage.

### DARSTELLUNG DER ERFINDUNG

Ausgehend von Stand der Technik liegt der Erfindung insbesondere die Aufgabe zugrunde, eine Befestigungsvorrichtung anzugeben, welche die Nachteile des Standes der Technik überwindet. Insbesondere solle eine Befestigungsvorrichtung angegeben werden, welche auf einfache Art montiert resp. demontiert werden können.

Diese Aufgabe löst die Befestigungsvorrichtung, die Toiletten-Kombination, die Toilette und das Verfahren gemäss den unabhängigen Ansprüchen. Weitere Ausführungsformen sind in den abhängigen Ansprüchen angegeben.

Eine vorgeschlagene Befestigungsvorrichtung zur Befestigung einer Toilettenabdeckung an einem Toilettenkörper umfasst ein Befestigungselement sowie ein Aktuatorelement. Das Befestigungselement umfasst einen Schwenklagerabschnitt, an welchem mindestens ein Klemmelement schwenkbar gelagert ist, wobei das mindestens ein Klemmelement durch eine Betätigung des Aktuatorelementes verschwenkbar ist. Das mindestens eine Klemmelement dient dazu, die Befestigungsvorrichtung an dem Toilettenkörper durch Klemmung zu befestigen. Die Befestigungsvorrichtung umfasst einen Anschlagsabschnitt mit einer Anschlagsfläche zur Auflage am Toilettenkörper, wobei der Toilettenkörper bevorzugt zwischen dem Klemmelement und den Anschlagsabschnitt eingeklemmt werden kann. Das Befestigungselement umfasst weiter einen Lagerabschnitt zur Lagerung der Toilettenabdeckung.

Der Anschlagabschnitt ist vorzugsweise starr an dem Befestigungselement angeordnet, kann aber auch beweglich, beispielsweise als weiteres, im Abstand zum Schwenklagerabschnitt gelagertes Klemmelement, ausgebildet sein. Der Anschlagsabschnitt ist bevorzugt als Flansch und die Anschlagsfläche als ein Kreisring des Flansches ausgebildet.

Vorzugsweise ist im eingeklemmten Zustand die Befestigungsvorrichtung kraftschlüssig aufgrund der Klemmwirkung mit dem Toilettenkörper verbunden. Eine formschlüssige Verbindung wäre auch denkbar.

Das mindestens eine Klemmelement ist durch eine Betätigung des Aktuatorelementes vorzugsweise von einer Ausgangsposition in eine Klemmposition verschwenkbar, in welcher das Befestigungselement einen Toilettenkörper, bevorzugt zwischen dem Anschlagsabschnitt und dem mindestens einem Klemmelement, einklemmt. Vorzugsweise kann das mindestens eine Klemmelement, bevorzugt durch eine weitere Betätigung des Aktuatorelementes, von der Klemmposition in die Ausgangsposition verschwenkt werden kann. Dadurch kann die Befestigungsvorrichtung wieder in eine Ausgangssituation zurückversetzt werden und der Prozess in diesem Sinne reversibel sein. In der Ausgangsposition ist das mindestens eine Klemmelement bevorzugt in eine Montageaussparung des Toilettenkörpers ein- und ausführbar.

Bevorzugt umfasst die Befestigungsvorrichtung, vorzugsweise der Lagerabschnitt, einen Zylinder, wobei das mindestens eine Klemmelement
- in der Ausgangsposition komplett innerhalb einer Fortsetzung des Zylinders angeordnet ist, und
- in der Klemmposition - zumindest teilweise - ausserhalb der Fortsetzung des Zylinders angeordnet ist.

Die Breite des Zylinders ist vorzugsweise kleiner als die Breite eine Montageaussparung des Toilettenkörpers. Der Zylinder kann als runder oder allgemeiner Zylinder ausgebildet sein, dessen Grundfläche die Breite des Zylinders realisiert. Der Zylinder kann beispielsweise ein Gehäuse des Lagerabschnittes - zumindest teilweise - umranden. Der Zylinder ist vorzugsweise weniger breit als der Anschlagsabschnitt.

Das mindestens eine Klemmelement umfasst einen ersten Armabschnitt und einen zweiten Armabschnitt, welche so angeordnet sind, dass das Aktuatorelement bei Betätigung auf den ersten Armabschnitt wirkt und dadurch das Klemmelement verschwenkt. Vorzugsweise ist der zweite Armabschnitt dazu eingerichtet, in einer Klemmposition des Klemmelementes, bevorzugt mit einer an dem zweiten Armabschnitt angeordneten Schwenk-Klemmfläche, gegen den Toilettenkörper zu drücken. Vorzugsweise ist die Schwenk-Klemmfläche in der Klemmposition des

Klemmelementes im Wesentlichen parallel zu der Anschlagsfläche. Eine winklige Ausrichtung, beispielsweise in einem Winkel von *0*°±*20*° zur Anschlagsfläche wäre auch denkbar. In der Ausgangsposition ist die Schwenk-Klemmfläche bevorzugt im Wesentlichen senkrecht zur Anschlagsfläche. Eine winklige Ausrichtung, beispielsweise in einem Winkel von *90°*±*20°* zur Anschlagsfläche wäre auch denkbar.

An den Schwenk-Klemmflächen und/oder an der Anschlagfläche sind vorzugsweise weiche, insbesondere elastische, Auflageelemente, beispielsweise aus Gummi, angeordnet, welche bei Klemmung gegen den Toilettenkörper gepresst werden. Die weichen Auflageelemente können dazu geeignet sein,
- das Material des Toilettenkörpers und/oder der Befestigungsvorrichtung schützen; und/oder
- Unebenheiten, Schrägstellungen und/oder Fehlstellungen ausgleichen.

Das mindestens eine Klemmelement ist vorzugsweise steif ausgebildet, so dass es sich im Normalgebrauch nicht verformt. Die Steifheit wird von der geometrischen Form und den verwendeten Materialien beeinflusst. Bevorzugt besteht das Klemmelement aus Metall.

An dem Schwenklagerabschnitt sind vorzugsweise mindestens ein erstes Klemmelement und ein zweites Klemmelement schwenkbar gelagert. Durch die Anordnung von zwei Klemmelementen ergeht der Vorteil einer symmetrischen Abstützung.

Die beiden Klemmelemente sind bevorzugt durch Betätigung eines einzigen Aktuatorelementes verschwenkbar. Das heisst, dass das Aktuatorelement auf beide Klemmelemente einwirkt.

Die beiden Klemmelemente sind vorzugsweise so angeordnet, dass sie bei Betätigung in unterschiedliche Richtungen verschwenkt werden. Die beiden Schwenkebenen liegen vorzugsweise parallel zueinander oder in einem Winkel von *0*°±*20*° zueinander. Bevorzugt sind die beiden Schwenkebenen identisch. Vorzugsweise verschwenken die beiden Klemmelemente in entgegengesetzte Richtungen, welche beispielsweise in einem Winkel von *180°±20°* zueinander liegen.

Vorzugsweise sind mindestens zwei Klemmelemente, zumindest in der jeweiligen Ausgangsposition, ineinander verschränkt. Dadurch kann eine besonders kompakte Bauweise ermöglicht werden. Die mindestens zwei Klemmelemente sind bevorzugt im Wesentlichen identisch geformt, und vorzugweise zueinander gedreht an dem Schwenklagerabschnitt angeordnet.

In einigen Ausführungsbeispielen umfasst die Befestigungsvorrichtung genau zwei schwenkbar gelagerte Klemmelemente.

Das Befestigungselement ist vorzugsweise als kompakte Einheit ausgebildet. Bevorzugt sind im Normalgebrauch alle Komponenten des Befestigungselementes fest miteinander verbunden und vorzugsweise so ausgebildet, dass die einzelnen Komponenten nicht voneinander trennbar sind. Bevorzugt sind die einzelnen Komponenten nicht ohne den Einsatz von Werkzeug voneinander trennbar. Beispielsweise kann das Befestigungselement, abgesehen von den Klemmelementen und den für deren Befestigung nötigen Komponenten, einstückig ausgebildet sein.

Vorzugsweise sind verschwenkbaren Klemmelemente die einzigen beweglich gelagerten Komponenten des Befestigungselementes.

Das Aktuatorelement ist vorzugsweise als Schraube, bevorzugt als Gewindestift ausgebildet. Das Befestigungselement umfasst vorzugsweise ein Gewinde, in welche die Schraube eingedreht werden kann. Die Befestigungsvorrichtung ist vorzugsweise so ausgebildet, dass durch Eindrehen der Schraube in das Gewinde das mindestens eine Klemmelement von einer Ausgangsposition in eine Klemmposition verschwenkt wird. Bevorzugt ist die Befestigungsvorrichtung ferner so ausgebildet, dass durch Ausdrehen der Aktuatorelement aus dem Gewinde, also Drehen in einer zum Eindrehen entgegengesetzten Richtung, das mindestens eine Klemmelement von der Klemmposition wieder in die Ausgangsposition verschwenkt wird. Das Aktuatorelement weist vorzugweise ein Mitnahmeprofil, beispielsweise einen Innenmehrkant, auf.

Die Befestigungsvorrichtung ist vorzugsweise so ausgebildet, dass von der Seite aus, von der sie in den Toilettenkörper eingeführt werden kann, auch das Aktuatorelement betätigt werden kann. Dadurch können alle Schritte zur Montage der Befestigungsvorrichtung von einer Seite aus vorgenommen werden. Bevorzugt kann von dieser Seite auf ein Mitnahmeprofil des Aktuatorelementes zugegriffen werden.

Vorzugsweise ist die Befestigungsvorrichtung so ausgebildet, dass ein Ende der Befestigungsvorrichtung, von dem aus das Aktuatorelement betätigt werden kann, einem Ende der Befestigungsvorrichtung, an dem der Schwenklagerabschnitt angeordnet ist, gegenüberliegt.

Zudem wird eine Toiletten-Kombination aufweisend einen Toilettenkörper und eine hierin beschriebene Befestigungsvorrichtung vorgeschlagen. Der Toilettenkörper umfasst vorzugsweise eine Montageaussparung zur Einfuhr der Befestigungsvorrichtung zur Befestigung an dem Toilettenkörper. Die Toiletten-Kombination ist vorzugsweise so ausgebildet, dass das mindestens eine Klemmelement in einer Ausgangposition in die Montageaussparung, bevorzugt bis zum Anschlag des Anschlagabschnittes an einen Rand der Montageaussparung, eingeführt werden kann; und aus der Montageaussparung auch wieder ausgeführt werden kann. Die Toiletten-Kombination ist bevorzugt so ausgebildet, dass das mindestens eine Klemmelement in einer Klemmposition nicht aus der Montageaussparung ausgeführt werden kann. Die Toiletten-Kombination ist vorzugsweise so ausgebildet, dass die Befestigungsvorrichtung, wenn sie in die Montageaussparung eingeführt ist und das mindestens eine Klemmelement in eine Klemmposition verschwenkt ist, durch einen Klemmschluss, und bevorzugt auch durch einen Formschluss, mit dem Toilettenkörper verbunden ist.

Der Anschlagsabschnitt und das mindestens eine Klemmelement sind vorzugsweise mit einem Abstand voneinander beabstandet, wobei der Abstand bevorzugt mindestens 1°cm beträgt. Der Abstand entspricht vorzugsweise - zumindest im Wesentlichen - der Länge der Montageaussparung.

Das Befestigungselement umfasst vorzugsweise einen den Anschlagabschnitt und den Schwenklagerabschnitt voneinander beabstandenden Verbindungsabschnitt, welcher bevorzugt im Wesentlichen so lang wie die Montageaussparung ist. Der Verbindungsabschnitt ist vorzugsweise nicht kürzer als die Montageaussparung. Die Länge des Verbindungsabschnittes entspricht bevorzugt im Wesentlichen dem besagten Abstand. Der Verbindungsabschnitt ist vorzugsweise dazu ausgebildet, im befestigten Zustand der Befestigungsvorrichtung in der Montageaussparung, angeordnet zu sein. Die Anschlagfläche ist bevorzugt auf der Höhe des Überganges des Anschlagabschnittes zum Verbindungsabschnitt angeordnet. Die Schwenk-Klemmfläche des mindestens einen Klemmelementes ist in Klemmposition vorzugsweise auf der Höhe des Überganges des Schwenklagerabschnittes zum Verbindungsabschnitt angeordnet.

Die Toiletten-Kombination ist bevorzugt derart ausgebildet, dass
- der Anschlagsabschnitt, vorzugsweise die Anschlagsfläche, gegen eine, vorzugsweise an einem Rand der Montageaussparung angeordnete, erste Montageklemmfläche klemmen kann, und
- das mindestens eine Klemmelement, vorzugsweise die Schwenk-Klemmfläche, gegen eine, vorzugsweise an einem Rand der Montageaussparung angeordnete, zweite Montageklemmfläche klemmen kann.

Die zweite Montageklemmfläche ist bevorzugt - zumindest im Wesentlichen - in eine zur der Richtung der ersten Montageklemmfläche entgegengesetzte Richtung angeordnet. Beispielswiese können die beiden Montageklemmflächen in einem Winkel von *180*°+/-*20*° zueinander liegen. Vorzugsweise zeigt die obere Montageklemmfläche nach oben und die untere Montageklemmfläche nach unten.

Es wird zudem eine Toilette umfassend eine hierin beschriebene Toiletten-Kombination sowie mindestens eine Toilettenabdeckung, vorzugsweise ein Toilettendeckel und/oder eine Toilettenbrille, vorgeschlagen, wobei die Toilettenabdeckung mittels der Befestigungsvorrichtung an dem Toilettenkörper befestigt ist.

Zudem wird ein Verfahren zum Befestigen einer hierin beschriebenen Befestigungsvorrichtung an einem Toilettenkörper vorgestellt, welches die folgenden Schritte umfasst:
- Einführen, bevorzugt von oben, der Befestigungsvorrichtung in eine Montageaussparung des Toilettenkörpers durch Einführen des mindestens einen Klemmelementes in die Montageaussparung bis der Anschlagsabschnitt der Befestigungsvorrichtung an eine, vorzugsweise nach oben gerichtete, erste Montageklemmfläche der Montageaussparung anschlägt, und
- Betätigen des Aktuatorelementes, so dass das mindestens eine Klemmelement verschwenkt und gegen eine zweite, vorzugsweise nach unten gerichtete, Montageklemmfläche der Montageaussparung verklemmt.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen schematisch:
- Fig. 1: eine in einen Toilettenkörper eingesetzte Befestigungsvorrichtung mit zwei Klemmelementen, welche sich in der Ausgangsposition befinden;
- Fig. 2: die Befestigungsvorrichtung aus Fig.1, deren Klemmelemente sich in einem Übergangssituation von der Ausgangsposition in die Klemmposition befinden;
- Fig. 3: die Befestigungsvorrichtung aus Fig.2, deren Klemmelemente sich in der Klemmposition befinden;
- Figs 4a/4b: zwei Schnitte durch die in einen Toilettenkörper eingesetzte Befestigungsvorrichtung aus Figur 1;
- Fig. 5: eine Explosionszeichnung einer Befestigungsvorrichtung aus den Figuren 1-4b; und
- Fig. 6: eine weitere in einen Toilettenkörper eingeklemmte Befestigungsvorrichtung.

### BESCHREIBUNG BEVORZUGTER AUSFÜHRUNGSFORMEN

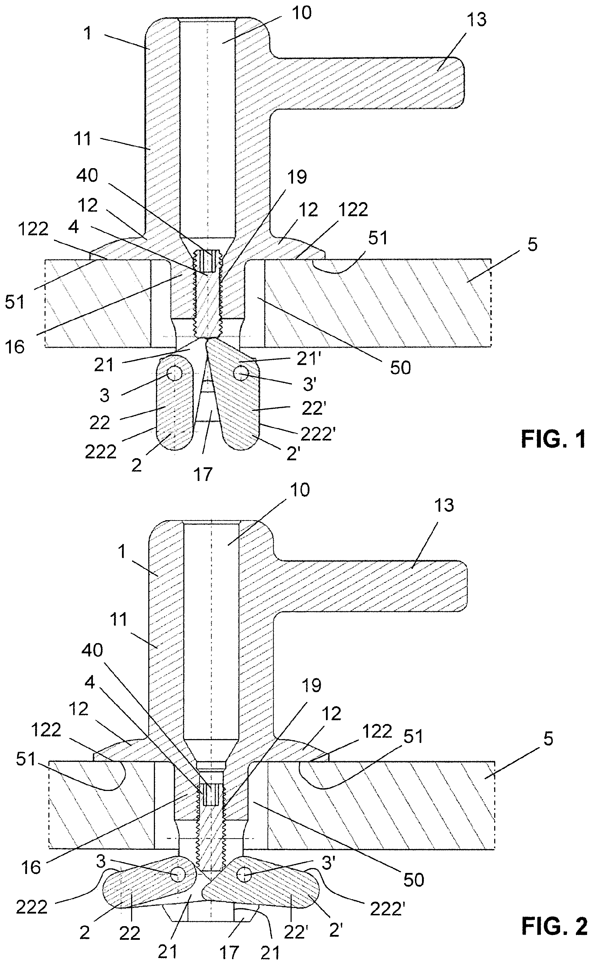

Figur 1 zeigt eine in eine Montageaussparung 50 eines Toilettenkörpers 5 eingesetzte Befestigungsvorrichtung, welche ein Befestigungselement 1 sowie ein Aktuatorelement 4 aufweist. Das Befestigungselement 1 umfasst einen Lagerabschnitt 11, einen Anschlagsabschnitt 12, einen Verbindungsabschnitt 16 und einen Schwenklagerabschnitt 17.

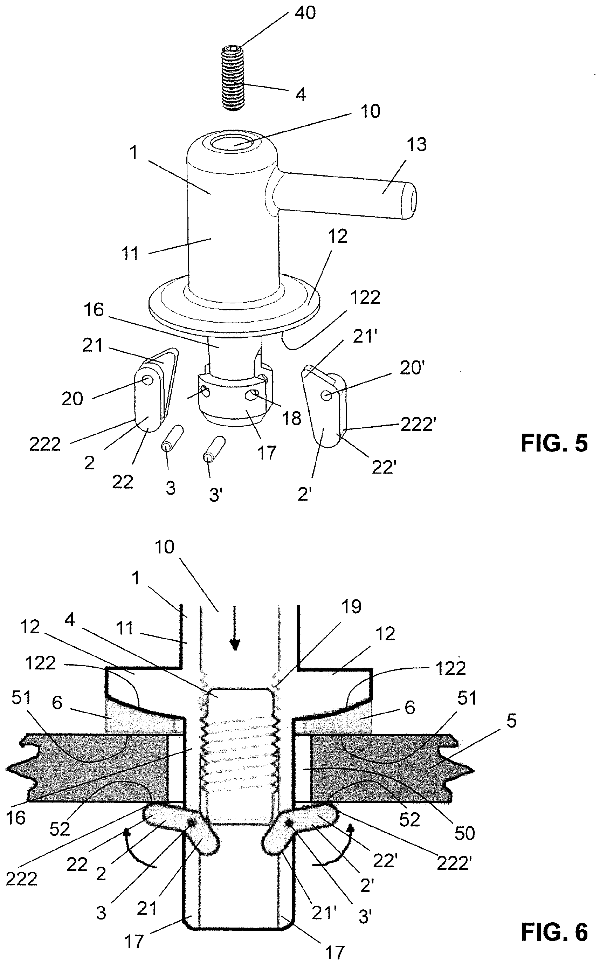

Wie in Figur 5 gut erkennbar ist, ist der Lagerabschnitt 11 im Wesentlichen als runder Zylinder ausgebildet, von dem ein als Zapfen ausgebildetes Lagerelement 13 absteht, an welchem eine Toilettenabdeckung (nicht gezeigt), beispielsweise ein Toilettendeckel und/oder eine Toilettenbrille, schwenkbar gelagert werden kann.

Der Anschlagsabschnitt 12 ist im Wesentlichen als Flansch ausgebildet, welcher von dem Lagerabschnitt 11 absteht und breiter als dieser ist. Der Anschlagsabschnitt 12 ist breiter als die Montageaussparung 50 ausgebildet, so dass die auf der Unterseite des Anschlagsabschnittes 12 angeordnete Anschlagfläche 122 auf dem Rand der Montageaussparung 50 zumindest teilweise aufliegen kann. Der Teil des Randes, auf dem die Anschlagfläche 122 aufliegt, wird als erste Montageklemmfläche 51 bezeichnet.

Der Verbindungsabschnitt 16 verbindet den Anschlagsabschnitt 12 mit dem Schwenklagerabschnitt 17 und ist ausreichend schmal ausgebildet, dass dieser, wie in Figur 1 dargestellt, vorzugsweise mit einem gewissen Spiel in der Montageaussparung 50 angeordnet werden kann. Der Verbindungsabschnitt 16 ist in etwa so lang wie die Montageaussparung 50.

An dem Schwenklagerabschnitt 17 sind zwei identisch geformte Klemmelemente 2, 2` schenkbar gelagert, indem jeweils als Schwenkachse fungierende Stifte 3, 3' durch Ausnehmungen 18 des Schwenklagerabschnittes 17 und durch Ausnehmungen 20, 20' der Klemmelemente 2, 2' geführt sind. In Figur 1 sind die Klemmelemente 2, 2' jeweils in einer Ausgangsposition dargestellt, in welcher der Schwenklagerabschnitt 17 mit den Klemmelemente 2, 2' in die Montageaussparung 50 ein- und ausgeführt werden kann. Die Klemmelemente 2, 2` sind in der Ausgangsposition komplett innerhalb der Fortsetzung des Zylinders des Lagerabschnittes 11 angeordnet. Die Klemmelemente 2, 2` weisen jeweils einen ersten Armabschnitt 21, 21' sowie einen zweiten Armabschnitt 22, 22` auf. An aussen liegenden Seiten der zweiten Armabschnitte 22, 22` ist jeweils eine Schwenk-Klemmfläche 222, 222` angeordnet, welche in den in Figur 1 gezeigten Ausgangspositionen in etwa senkrecht zur Anschlagfläche 122 und in etwa parallel zur Zylinderachse liegen. Die beiden Klemmelemente 2, 2` sind zueinander um 180° gedreht angeordnet, so dass die beiden Schwenkebenen parallel zueinander liegen. Vorliegend sind die beiden Klemmelemente 2, 2' nebeneinander angeordnet, so dass die beiden Schwenkebenen sogar identisch sind.

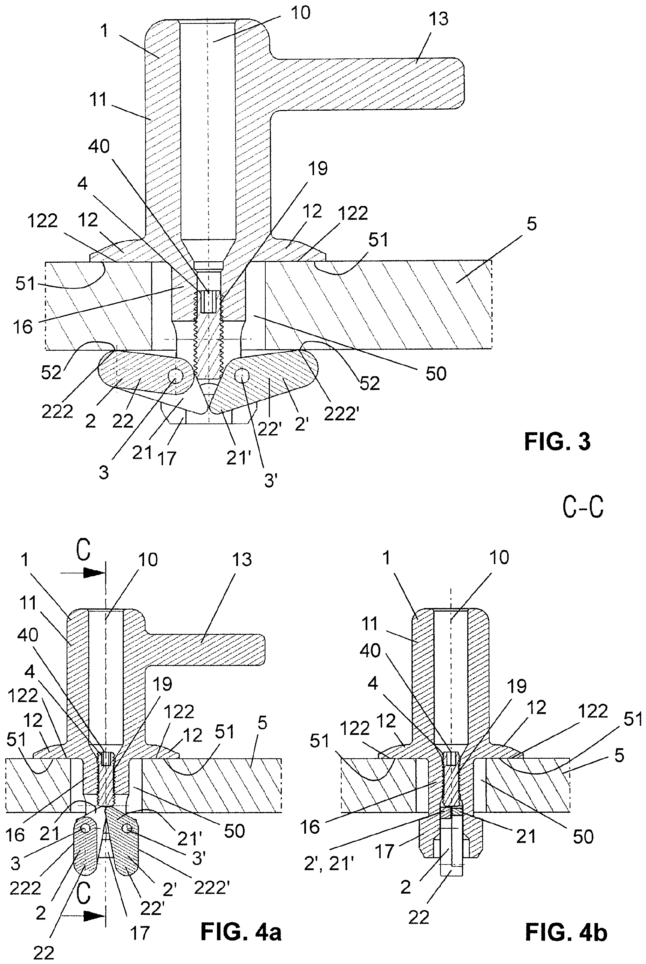

Der jeweilige erste Armabschnitt 21, 21' ist als Lasche ausgebildet, welche, wie in Figur 4b erkennbar ist, ungefähr halb so breit wie der zweite Armabschnitt 22, 22' ist. Durch die zueinander gedrehte und nur leicht versetzte Anordnung, sind die beiden Laschen ineinander verschränkt, wodurch eine besonders kompakte Ausgestaltung möglich ist.

In dem Befestigungselement 1 ist ein Gewinde 19 angeordnet, in welchem das als Gewindestift dargestellte Aktuatorelement 4 eingeschraubt ist. Der Gewindestift 4 weist ein Mitnahmeprofil 40 auf, auf welches durch eine Aussparung 10 in dem Befestigungselement 1, beispielsweise mit einem Schraubdreher, zugegriffen werden kann. In Figur 1 liegt ein dem Mitnahmeprofil 40 gegenüberliegendes Ende des Gewindestiftes 4 an die beiden ersten Armabschnitte 21, 21' der Klemmelemente 2, 2` an.

Figur 2 zeigt die Befestigungsvorrichtung in einer Übergangssituation. Der Gewindestift 4 wurde - im Verglich zur Situation in Figur 1 - in das Gewinde 19 eingedreht, so dass das dem Mitnahmeprofil 40 gegenüberliegende Ende des Gewindestiftes 4 auf die ersten Armabschnitte 21, 21' der beiden Klemmelemente 2, 2` wirkt. Durch diese Betätigung werden die beiden Klemmelemente 2, 2' verschwenkt. Da die jeweilige Schwenkachse der Klemmelemente 2, 2` auf unterschiedlichen Seiten des Gewindestiftes 4 angeordnet sind, werden die beiden Klemmelemente 2, 2` in zwei unterschiedliche Richtungen verschwenkt. In der in Figur 2 dargestellten Situation sind die beiden Klemmelemente 2, 2` bereits so stark verschenkt, dass sie, und insbesondere die beiden zweiten Armabschnitte 22, 22', die Fortsetzung des Zylinders des Lagerabschnittes 11 verlassen haben. In der in Figur 2 dargestellten Situation ist die Befestigungsvorrichtung durch die Anschlagsfläche 12 und die beiden Klemmelemente 2, 2` bereits mit dem Toilettenkörper 5 durch einen Formschluss verbunden. Insbesondere kann die Befestigungsvorrichtung nicht mehr nach oben ausgeführt werden, weil die Klemmelemente 2, 2` in ihrer dargestellten Position nicht mehr durch die Montageaussparung 50 passen.

Figur 3 zeigt die Klemmelemente 2, 2' in einer Klemmposition. Dabei sind die Schwenk-Klemmflächen 222, 222` von unten gegen eine am unteren Rand der Montageaussparung 50 angeordnete zweite Montageklemmfläche 52 gedrückt und die Anschlagfläche 122 von oben gegen die am unteren Rand der Montageaussparung 50 angeordnete erste Montageklemmfläche 51 gedrückt, so dass der Toilettenkörper 5 zwischen den Schwenk-Klemmflächen 222, 222` der Klemmelemente 2, 2` und der Anschlagfläche 122 geklemmt ist, wodurch die Befestigungsvorrichtung und insbesondere das Befestigungselement 1 an dem Toilettenkörper 5 befestigt sind. In dieser Position liegen die Schwenk-Klemmflächen 222, 222` im Wesentlichen parallel zu der Anschlagfläche 122.

Die Klemmelemente 2, 2` und der Anschlagabschnitt 12 sind vorzugsweise steif ausgebildet, so dass sie beim Klemmen gegen den Toilettenkörper 5 nicht verformt werden. Bevorzugt bestehen diese Komponenten aus Metall oder Hartplastik. Ein steifes Klemmelement 2, 2` kann eine stabile Klemmung und/oder ein reversibles Verschwenken der Klemmelemente 2, 2` ermöglichen.

Die Figur 4b zeigt einen Schnitt durch die C-C-Ebene in Figur 4a, wodurch die Lage der beiden Klemmelemente 2, 2` in der Ausgangsposition besonders gut erkennbar ist. Die beiden Klemmelemente 2, 2` sind in dieser Position ineinander verschränkt und der Schnitt verläuft sowohl durch den ersten Armabschnitt 21 des ersten Klemmelementes 2, als auch durch den ersten Armabschnitt 21' des zweiten Klemmelementes 2'.

Figur 5 zeigt eine dreidimensionale Explosionszeichnung der Befestigungsvorrichtung aus den Figuren 1 - 4b. Der Lagerabschnitt 11 weist einen runden Zylinder auf, aus dem das ebenfalls als runder Zylinder ausgebildete Lagerelement 13 herausragt. Auch die Aussparung 10 in dem Befestigungselement 1, durch welche auf das Aktuatorelement 4 zugegriffen werden kann, ist rund ausgebildet. Der Anschlagsabschnitt 12 ist als runder Flansch ausgebildet und die Anschlagfläche 122 als umlaufender Kreisring an dessen unterem Ende. Gut zu erkennen sind die Ausnehmungen 18 in dem Schwenklagerabschnitt 17 und die Ausnehmungen 20, 20' in den Klemmelementen 2, 2`, durch welche zur schwenkbaren Lagerung die Stifte 3, 3' geschoben werden.

Figur 6 zeigt eine andere mögliche Ausführungsform der vorgeschlagenen Befestigungsvorrichtung. Ebenso wie in dem in den Figuren 1-5 dargestellten Beispiel, ist auch hier der Anschlagsabschnitt 12 fest an dem Befestigungselement 1 angeordnet. Der Anschlagsabschnitt 12 könnte aber beispielsweise ebenfalls verschwenkbare Klemmelemente aufweisen, welche bei entsprechender Betätigung gegen die erste Montageklemmfläche 51 drücken.

Die Anschlagfläche 122 ist in dem in Figur 6 gezeigten Beispiel nicht flach, sondern gebogen ausgebildet. Dafür ist an der Anschlagfläche 122 ein entsprechend geformtes Auflageelement 6 angeordnet. Das Auflageelement 6 kann aus einem weichen Material wie z.B. Gummi bestehen, um sich gegebenenfalls anpassen zu können und/oder den Toilettenkörper 5 bei der Klemmung zu schonen. Auch an den Schwenk-Klemmflächen 222, 222` könnten weiche Auflageelemente (nicht gezeigt) angeordnet sein.

Ebenso wie in dem in den Figuren 1-5 dargestellten Beispiel, wirkt auch bei dem in Figur 6 gezeigten Beispiel das Aktuatorelement 4 bei Betätigung gleichermassen auf die beiden Klemmelemente 2, 2'. Es ist aber ebenso vorstellbar, dass das Aktuatorelement 4 zunächst nur auf eines der Klemmelemente wirkt, und dieses wiederum über eine Mechanik, z.B. über eine Verzahnung, auf das andere Klemmelement wirkt.

### BEZUGSZEICHENLISTE

| | | | |
|---|---|---|---|
| 1 | Befestigungselement | 21, 21' | erster Armabschnitt |
| 10 | Aussparung | 22, 22' | zweiter Armabschnitt |
| 11 | Lagerabschnitt | 222, 222' | Schwenk-Klemmfläche |
| 12 | Anschlagsabschnitt | 3, 3' | Stifte |
| 122 | Anschlagfläche | 4 | Aktuatorelement |
| 13 | Lagerelement (Zapfen) | 40 | Mitnahmeprofil |
| 16 | Verbindungsabschnitt | 5 | Toilettenkörper |
| 17 | Schwenklagerabschnitt | 50 | Montageaussparung |
| 18 | Ausnehmung | 51 | erste Montageklemmfläche |
| 19 | Gewinde | 52 | zweite Montageklemmfläche |
| 2, 2' | Klemmelement | 6 | Auflageelement |
| 20, 20' | Ausnehmung | | |

## Patentansprüche

1. Befestigungsvorrichtung zur Befestigung einer Toilettenabdeckung an einem Toilettenkörper (5), umfassend
ein Befestigungselement (1) mit einem Anschlagsabschnitt (12) mit einer Anschlagsfläche (122) zur Auflage am Toilettenkörper (5) und einem Lagerabschnitt (11) zur Lagerung der Toilettenabdeckung, und
ein Aktuatorelement (4),
wobei das Befestigungselement (1) weiter einen Schwenklagerabschnitt (17) umfasst, an welchem mindestens ein Klemmelement (2) schwenkbar gelagert ist und dass das mindestens eine Klemmelement (2) durch eine Betätigung des Aktuatorelementes (4) verschwenkbar ist, **dadurch gekennzeichnet, dass** das mindestens eine Klemmelement (2) einen ersten Armabschnitt (21) und einen zweiten Armabschnitt (22) umfasst, welche so angeordnet sind, dass das Aktuatorelement (4) bei Betätigung auf den ersten Armabschnitt (21) wirkt und dadurch das Klemmelement (2) verschwenkt.

2. Befestigungsvorrichtung gemäss Anspruch 1, **dadurch gekennzeichnet, dass** das mindestens eine Klemmelement (2) durch eine Betätigung des Aktuatorelementes (4) von einer Ausgangsposition in eine Klemmposition verschwenkbar ist, in welcher zwischen dem Anschlagsabschnitt (12) und dem mindestens einem Klemmelement (2) ein Toilettenkörper (5) einklemmt werden kann und dadurch das Befestigungselement (1) an dem Toilettenkörper (5) befestigt werden kann.

3. Befestigungsvorrichtung gemäss Anspruch 2, **dadurch gekennzeichnet, dass** der Lagerabschnitt (11) einen Zylinder aufweist und das mindestens eine Klemmelement (2) in der Ausgangsposition komplett innerhalb einer Fortsetzung des Zylinders liegt, und in der Klemmposition ausserhalb der Fortsetzung des Zylinders liegt.

4. Befestigungsvorrichtung gemäss einem der Ansprüche 2 oder 3, **dadurch gekennzeichnet, dass** das mindestens eine Klemmelement (2) durch die Betätigung des Aktuatorelementes (4) von der Klemmposition in die Ausgangsposition verschwenkt werden kann.

5. Befestigungsvorrichtung gemäss einem der vorstehenden Ansprüche, **dadurch gekennzeichnet, dass** das mindestens eine Klemmelement (2) steif ausgebildet ist, wobei das Klemmelement vorzugsweise im Wesentlichen aus Metall besteht.

6. Befestigungsvorrichtung gemäss einem der vorstehenden Ansprüche, **dadurch gekennzeichnet, dass** an dem Schwenklagerabschnitt (17) ein erstes Klemmelement (2) und ein zweites Klemmelement (2') schwenkbar gelagert sind.

7. Befestigungsvorrichtung gemäss Anspruch 6, **dadurch gekennzeichnet, dass** beide Klemmelemente (2, 2') durch Betätigung eines einzigen Aktuatorelementes (4) verschwenkbar sind.

8. Befestigungsvorrichtung gemäss einem der Ansprüche 6 oder 7, **dadurch gekennzeichnet, dass** die beiden Klemmelemente (2, 2') so angeordnet sind, dass sie bei Betätigung in unterschiedliche Richtungen, vorzugsweise entgegengesetzte Richtungen, verschwenkt werden.

9. Befestigungsvorrichtung gemäss Anspruch 6 bis 8, **dadurch gekennzeichnet, dass** beide Klemmelemente (2, 2'), zumindest in einer jeweiligen Ausgangsposition, ineinander verschränkt sind.

10. Befestigungsvorrichtung gemäss einem der vorstehenden Ansprüche, **dadurch gekennzeichnet, dass** das Klemmelement (2) bzw. die Klemmelemente (2, 2') die einzigen beweglich gelagerten Komponenten des Befestigungselementes (1) sind.

11. Befestigungsvorrichtung gemäss einem der vorstehenden Ansprüche, **dadurch gekennzeichnet, dass** das Aktuatorelement (4) als Schraube, vorzugsweise als Gewindestift, ausgebildet, ist.

12. Toiletten-Kombination umfassend eine Befestigungsvorrichtung gemäss einem der vorstehenden Ansprüche und einen Toilettenkörper (5), wobei der Toilettenkörper (5) eine Montageaussparung (50) zur Einfuhr der Befestigungsvorrichtung zur Befestigung an dem Toilettenkörper (5) umfasst, und dass die Toiletten-Kombination vorzugsweise so ausgebildet ist,
- dass das mindestens eine Klemmelement (2) in einer Ausgangposition in die Montageaussparung (50) eingeführt und aus der Montageaussparung (50) ausgeführt werden kann, und
- dass die Befestigungsvorrichtung, wenn sie in die Montageaussparung (50) eingeführt ist und das mindestens eine Klemmelement (2) in eine Klemmposition verschwenkt ist, durch einen Klemmschluss, und vorzugsweise auch durch einen Formschluss, mit dem Toilettenkörper (5) verbunden ist.

13. Toiletten-Kombination gemäss Anspruch 12, **dadurch gekennzeichnet, dass** das Befestigungselement (1) einen den Anschlagabschnitt (11) und den Schwenklagerabschnitt (17) voneinander beabstandenden Verbindungsabschnitt (16) umfasst, welcher im Wesentlichen so lang wie die Montageaussparung (50) ist.

14. Toilette umfassend eine Toiletten-Kombination gemäss einem der Ansprüche 12 oder 13 und mindestens eine Toilettenabdeckung, wobei die Toilettenabdeckung mittels der Befestigungsvorrichtung an dem Toilettenkörper (5) befestigt ist.

15. Verfahren zum Befestigen einer Befestigungsvorrichtung gemäss einem der Ansprüche 1 bis 11 an einem Toilettenkörper (5), umfassend
- Einführen der Befestigungsvorrichtung in eine Montageaussparung (50) des Toilettenkörpers (5) durch Einführen des mindestens einen Klemmelementes (2) in die Montageaussparung (50) bis der Anschlagsabschnitt (12) der Befestigungsvorrichtung an eine erste Montageklemmfläche (51) der Montageaussparung (50) anschlägt, und
- Betätigen des Aktuatorelementes (4), so dass das mindestens eine Klemmelement (2) verschwenkt und gegen eine zweite Montageklemmfläche (52) der Montageaussparung (50) verklemmt.

## Claims

1. Fastening device for fastening a toilet cover to a toilet body (5), comprising
a fastening member (1) having an stop portion (12) with an stop surface (122) for abutment on the toilet body (5) and a bearing portion (11) for bearing the toilet cover, and
an actuator member (4),
wherein the fastening member (1) further comprises a pivot bearing portion (17) on which at least one clamping member (2) is pivotally supported, and that the at least one clamping member (2) is pivotable by an actuation of the actuator member (4), **characterized in that** the at least one clamping member (2) comprises a first arm portion (21) and a second arm portion (22), which are arranged such that the actuator member (4) acts on the first arm portion (21) upon actuation and thereby pivots the clamping member (2).

2. Fastening device according to claim 1, **characterized in that** the at least one clamping member (2) is pivotable by an actuation of the actuator member (4) from an initial position into a clamping position, in which a toilet body (5) can be clamped between the stop section (12) and the at least one clamping member (2) and thereby the fastening member (1) can be fastened to the toilet body (5).

3. Fastening device according to claim 2, **characterized in that** the bearing portion (11) comprises a cylinder and the at least one clamping member (2) lies completely inside a continuation of the cylinder in the initial position, and lies outside the continuation of the cylinder in the clamping position.

4. Fastening device according to one of claims 2 or 3, **characterized in that** the at least one clamping member (2) can be pivoted from the clamping position to the starting position by actuation of the actuator member (4).

5. Fastening device according to one of the preceding claims, **characterized in that** the at least one clamping member (2) is of rigid design, the clamping member preferably consisting essentially of metal.

6. Fastening device according to one of the preceding claims, **characterized in that** a first clamping member (2) and a second clamping member (2') are pivotally mounted on the pivot bearing portion (17).

7. Fastening device according to claim 6, **characterized in that** both clamping members (2, 2') are pivotable by actuation of a single actuator member (4).

8. Fastening device according to one of claims 6 or 7, **characterized in that** the two clamping members (2, 2') are arranged such that they are pivoted in different directions, preferably opposite directions, when actuated.

9. Fastening device according to claim 6 to 8, **characterized in that** both clamping members (2, 2'), at least in a respective starting position, are interlocked with each other.

10. Fastening device according to one of the preceding claims, **characterized in that** the clamping member (2) or the clamping members (2, 2') are the only movably mounted components of the fastening member (1).

11. Fastening device according to one of the preceding claims, **characterized in that** the actuator member (4) is formed as a screw, preferably as a threaded pin.

12. Toilet combination comprising a fastening device according to one of the preceding claims and a toilet body (5), wherein the toilet body (5) comprises a mounting recess (50) for insertion of the fastening device for fastening to the toilet body (5), and in that the toilet combination is preferably designed,
- that the at least one clamping member (2) can be inserted into the mounting recess (50) in an exit position and exited from the mounting recess (50), and
- that the fastening device, when inserted into the mounting recess (50) and the at least one clamping member (2) is pivoted into a clamping position, is connected to the toilet body (5) by a clamping fit, and preferably also by a form fit.

13. Toilet combination according to claim 12, **characterized in that** the fastening member (1) comprises a connecting portion (16) spacing the stop portion (12) and the pivot bearing portion (17) from each other, which connecting portion is substantially as long as the mounting recess (50).

14. Toilet comprising a toilet combination according to one of claims 12 or 13 and at least one toilet cover, wherein the toilet cover is fixed to the toilet body (5) by means of the fixing device.

15. Method of fastening a fastening device according to any one of claims 1 to 11 to a toilet body (5), comprising
- inserting the fastening device into a mounting recess (50) of the toilet body (5) by inserting the at least one clamping member (2) into the mounting recess (50) until the stop portion (12) of the fastening device abuts against a first mounting clamping surface (51) of the mounting recess (50), and
- actuating the actuator member (4) so that the at least one clamping member (2) pivots and clamps against a second mounting clamping surface (52) of the mounting recess (50).

## Revendications

1. Dispositif de fixation pour fixer un couvercle de toilettes à un corps de toilettes (5), comprenant
un élément de fixation (1) comprenant une section de butée (12) avec une surface de butée (122) pour l'appui sur le corps de toilettes (5) et une section de support (11) pour le support du couvercle de toilettes, et
un élément actionneur (4),
l'élément de fixation (1) comprenant en outre une section de palier de pivotement (17) sur laquelle l'au moins un élément de serrage (2) est logé de manière pivotante et en ce que l'au moins un élément de serrage (2) peut être pivoté par un actionnement de l'élément actionneur (4), **caractérisé en ce que** l'au moins un élément de serrage (2) comprend une première section de bras (21) et une deuxième section de bras (22), qui sont disposées de telle sorte que l'élément actionneur (4) agit sur la première section de bras (21) lors de l'actionnement et fait ainsi pivoter l'élément de serrage (2).

2. Dispositif de fixation selon la revendication 1, **caractérisé en ce que** l'au moins un élément de serrage (2) peut être pivoté par un actionnement de l'élément actionneur (4) d'une position initiale à une position de serrage, dans laquelle un corps de toilettes (5) peut être serré entre la section de butée (12) et l'au moins un élément de serrage (2), l'élément de fixation (1) pouvant ainsi être fixé au corps de toilettes (5).

3. Dispositif de fixation selon la revendication 2, **caractérisé en ce que** la section de support (11) comprend un cylindre et **en ce que** l'au moins un élément de serrage (2) se trouve complètement à l'intérieur d'un prolongement du cylindre dans la position initiale, et à l'extérieur du prolongement du cylindre dans la position de serrage.

4. Dispositif de fixation selon l'une des revendications 2 ou 3, **caractérisé en ce que** l'au moins un élément de serrage (2) peut être pivoté de la position de serrage à la position initiale par l'actionnement de l'élément actionneur (4).

5. Dispositif de fixation selon l'une quelconque des revendications précédentes, **caractérisé en ce que** l'au moins un élément de serrage (2) est rigide, l'élément de serrage étant de préférence essentiellement constitué de métal.

6. Dispositif de fixation selon l'une quelconque des revendications précédentes, **caractérisé en ce qu'**un premier élément de serrage (2) et un deuxième élément de serrage (2') sont logés de manière pivotante sur la section de palier de pivotement (17).

7. Dispositif de fixation selon la revendication 6, **caractérisé en ce que** les deux éléments de serrage (2, 2') peuvent pivoter en actionnant un seul élément actionneur (4).

8. Dispositif de fixation selon l'une des revendications 6 ou 7, **caractérisé en ce que** les deux éléments de serrage (2, 2') sont agencés de manière à pivoter dans des directions différentes, de préférence des directions opposées, lorsqu'ils sont actionnés.

9. Dispositif de fixation selon les revendications 6 à 8, **caractérisé en ce que** les deux éléments de serrage (2, 2') sont imbriqués l'un dans l'autre, au moins dans une position initiale respective.

10. Dispositif de fixation selon l'une quelconque des revendications précédentes, **caractérisé en ce que** l'élément de serrage (2) ou les éléments de serrage (2, 2') sont les seuls composants de l'élément de fixation (1) à être montés mobiles.

11. Dispositif de fixation selon l'une quelconque des revendications précédentes, **caractérisé en ce que** l'élément actionneur (4) est une vis, de préférence une tige filetée.

12. Assemblage de toilettes comprenant un dispositif de fixation selon l'une quelconque des revendications précédentes et un corps de toilettes (5), dans lequel le corps de toilettes (5) comprend un évidement de montage (50) pour l'introduction du dispositif de fixation pour la fixation au corps de toilettes (5), l'assemblage de toilettes étant de préférence conçue de manière à ce que
- l'au moins un élément de serrage (2) puisse être introduit dans l'évidement de montage (50) et être retiré de l'évidement de montage (50) dans une position initiale, et
- le dispositif de fixation, lorsqu'il est introduit dans l'évidement de montage (50) et que l'au moins un élément de serrage (2) est pivoté dans une position de serrage, soit relié au corps de toilette (5) par une liaison par serrage, et de préférence également par une liaison par obstacle.

13. Assemblage de toilettes selon la revendication 12, **caractérisé en ce que** l'élément de fixation (1) comprend une section de liaison (16) espacée de la section de butée (11) et de la section de palier de pivotement (17), la section de liaison (16) étant essentiellement aussi longue que l'évidement de montage (50).

14. Toilettes comprenant un assemblage de toilettes selon l'une des revendications 12 ou 13 et au moins un couvercle de toilettes, le couvercle de toilettes étant fixé au corps de toilettes (5) au moyen du dispositif de fixation.

15. Procédé de fixation d'un dispositif de fixation selon l'une quelconque des revendications 1 à 11 à un corps de toilettes (5), comprenant
- l'insertion du dispositif de fixation dans un évidement de montage (50) du corps de toilette (5) en insérant l'au moins un élément de serrage (2) dans l'évidement de montage (50) jusqu'à ce que la partie de butée (12) du dispositif de fixation vienne en butée contre une première surface de serrage de montage (51) de l'évidement de montage (50), et
- l'actionnement de l'élément actionneur (4), de sorte que l'au moins un élément de serrage (2) pivote et se bloque contre une deuxième surface de serrage de montage (52) de l'évidement de montage (50).
